# EUROPÄISCHE PATENTSCHRIFT

(11) **EP 2 885 809 B1**
(45) Veröffentlichungstag und Bekanntmachung des Hinweises auf die Patenterteilung: **26.07.2017**
(21) Anmeldenummer: 13748015.8
(22) Anmeldetag: 08.08.2013
(51) Int. Cl.: H01J 61/34, H01J 61/52, C02F 1/32

(54) **Entladungsröhre mit Lagerung in ringförmigen Schraubenfedern**
Discharge tube mounted by toroidal coil springs
Tube à décharge monté sur des ressorts toroïdaux

(30) Priorität: 20.08.2012 CH 14242012
(43) Veröffentlichungstag der Anmeldung: 24.06.2015
(73) Patentinhaber: Ultralight AG, 9486 Schaanwald (LI)
(72) Erfinder: PRZYBILLA, Karl Richard, CH-9494 Schaan (LI); BAUER, Jörg, 87488 Betzigau (DE)
(74) Vertreter: Stocker, Kurt
(86) Internationale Anmeldenummer: PCT/EP2013/066643
(87) Internationale Veröffentlichungsnummer: WO 2014/029632

(56) Entgegenhaltungen:
- GB-A- 720 989
- JP-A- H07 153 311
- US-A- 2 009 226
- US-A- 4 826 144
- US-A- 4 841 422
- US-A1- 2009 266 531
- DATABASE WPI Week 198132 Thomson Scientific, London, GB; AN 1981-H4293D XP002717603, -& SU 779 727 A1 (VATRA PROD COMBINE) 15. November 1980 (1980-11-15)

## Beschreibung

Die vorliegende Erfindung bezieht sich auf eine geschlossen aufgebaute Entladungsröhre, die an beiden Enden jeweils eine mit dem jeweiligen elektrischen Anschluss versehene Kappe aufweist, wobei die Röhre in einem transparenten oder durchscheinenden Rohr als Abdeckung untergebracht ist und zwischen Röhre und Rohr endseitig der Röhre jeweils ein in Radialrichtung federndes Federelement eingebaut ist.

Ein derartiger Aufbau ist aus der GB 623,999 bekannt. Dabei geht es um Beleuchtungslampen auf Strassen od.dgl., die eine relativ geringe Wärmeabstrahlung besitzen, aber gegen Feuchtigkeit geschützt werden müssen. Das Federelement ist dabei von einer gewellten Blattfeder gebildet, die mit ihren inneren Wellenbergen an der Aussenseite der Röhre, mit ihren äusseren Wellenbergen an der Innenseite des umgebenden Rohres anliegt, also im wesentlichen entlang einer Linie. Dieses Federelement hat - wie in diesem Dokument ausgeführt wird - lediglich die Funktion eines Abstandhalters.

US 2 009 226 A zeigt eine Entladungsröhre mit jeweils rohrförmigem Innengefäss 1 und Aussengefäss 2, bei der die beiden elektrischen Anschlüsse in einem gemeinsamen Füsschen bei einem Schraubsockel 22 angeordnet und mit Kontaktbereichen des Schraubsockels verbunden sind. Auf die beiden Endteile des Innengefässes 1 sind zwei Metallringe 11,12 mit rinnenartigen Querschnitt aufgeschoben. Zwischen den Metallringen 11, 12 und dem Aussengefäss 2 sind federnde Schraubendrahtringe 15, 16 fest eingeklemmt. Das Innengefäss wird durch diese es konzentrisch umschliessenden Schraubendrahtringe vom Aussengefäss 2 abgestützt.

Die SU 779 727 A1 zeigt ein Leuchtmittel, das bei einer Seite an die Stromversorgung angeschlossen ist und einen an einer gekrümmten Fläche angeordneten Kragen zum Abstrahlen von Wärme umfasst. Als wärmeübertragendes Element zwischen Kragen 2 und Leuchtmittel 3 dienen mehrere, das Leuchtmittel 3 konzentrisch umschliessende, Schraubenfedern mit schräggestellten Windungen. Der Erfindung liegt die Aufgabe zugrunde, die Wärmeabstrahlung bzw. den Wärmeübergang nach aussen, insbesondere bei solchen Röhren zu verbessern, die eine erhebliche Hitze entwickeln, denn diese kann die Lebensdauer der Röhre beeinträchtigen. Erfindungsgemäss gelingt die Lösung dieser Aufgabe durch die Merkmale des Patentanspruchs 1.

Dadurch, dass eine Schraubenfeder mit relativ enger Windung verwendet wird, vorzugsweise mit einer Windungszahl von mindestens 7, vorzugsweise etwa 10 Windungen, pro Zentimeter Ihres Umfangs, und daher flächig an den der Aussenseite der Röhre bzw. an der Innenseite des Rohres anliegt, ergibt sich ein guter Wärmeübergang, wobei der Ausgleich von Toleranzen des Abstandes der beiden Teile (z.B. durch Unebenheiten des Rohres) durch die Elastizität der Windungen gegeben sein kann.

Ein noch besserer Ausgleich mit der Möglichkeit der Vergrösserung der Kontaktflächen ergibt sich durch eine Ausbildung gemäss dem Anspruch 2. Derartige zu ihrer Mittelliniemindestens abschnittsweise allseitig geneigte Schraubenfedern sind aus zahlreichen Schriften bekannt, und es seien als Beispiel und zum besseren Verständnis die US-Patentdokumente 3,468,527; 4,655,462; 4,826,144; 4,830,344; 4,876,781; 4,892,795; 4,907,788; 4,915,366; 4,917,302; 4,961,253; 4,974,821; 4,964,204; 5,160,122; 5,108, 078; 5,139,243; 5,139,276; 5,203,849; 5,239,737; 5,503,375; 5,542,682; 5,615,870; 5,709,371; 5,791,638; 7,055,812; 7,274,964 und 2012/0098179 genannt, wobei im Rahmen der vorliegenden Erfindung alle die dort gezeigten Federformen im Sinne des Anspruches 2 zu verstehen sind und mit Vorteil angewendet werden können, weil so auch die (bezüglich von Röhre und Rohr) radiale Elastizität verbessert wird.

Die Metallhülse kann mit Vorteile an einer relativ dünnen Keramikhülse mit der Röhre zugewandten Flansch sitzen, wobei der Wärmeübergang von dieser auf die Metallhülse über ein wärmeleitendes, einen Ausgleich der wärmebedingten Längendehnungen zulassendes Material, wie Graphit, insbesondere eine Graphitfolie, erfolgt. Diese Lösung ist auch unabhängig von der Verwendung einer Schraubenfeder einerseits für einen guten Wärmeübergang und anderseits für einen Ausgleich unterschiedlicher Wärmedehnungen günstig und stell daher an sich eine davon auch unabhängige Erfindung dar.

Die Erfindung bezieht sich ferner auf die Verwendung eines solchen Aufbaues im Sinne des Anspruches 8.

Weitere Einzelheiten der Erfindung ergeben sich aus der nachfolgenden Beschreibung eines bevorzugten Ausführungsbeispiels an Hand der Zeichnung. Es zeigen:
- Fig. 1: einen Längsschnitt durch den Aufbau einer der beiden Endkappen einer UV-Röhre; und
- Fig. 2: eine Ansicht auf eine mögliche und bevorzugte Ausführung einer im Aufbau der Fig. 2 verwendeten Schraubenfeder.

Eine Entladungsröhre 1 weist an jedem ihrer Enden eine Kappe 2 auf, wovon nur eine dargestellt ist (die gegenüberliegende ist spiegelbildlich aufgebaut). Die Entladungsröhre 1 umgibt einen Entladungsraum 3, in dem an jedem Ende der Röhre 1 eine Elektrode 4 untergebracht ist, welche über ein Kabel 5 als elektrischer Anschluss mit Strom versorgt wird. Dabei kann es bei manchen Anwendungen, wie bei UV-Röhren, zu höheren Temperaturen kommen. Die zwischen der Elektrode 4 und dem Kabel 5 liegende Einschmelzzone 6 ist aber relativ temperaturempfindlich. Deshalb ist es wichtig, für einen guten und rawird. Dabei kann es bei manchen Anwendungen, wie bei UV-Röhren, zu höheren Temperaturen kommen. Die zwischen der Elektrode 4 und dem Kabel 5 liegende Einschmelzzone 6 ist aber relativ temperaturempfindlich. Deshalb ist es wichtig, für einen guten und raschen Wärmeübergang nach aussen gegen ein die Röhre 1 umgebendes transparentes oder durchscheinendes Rohr 8 als Abdeckung für die Röhre 1 zu sorgen.

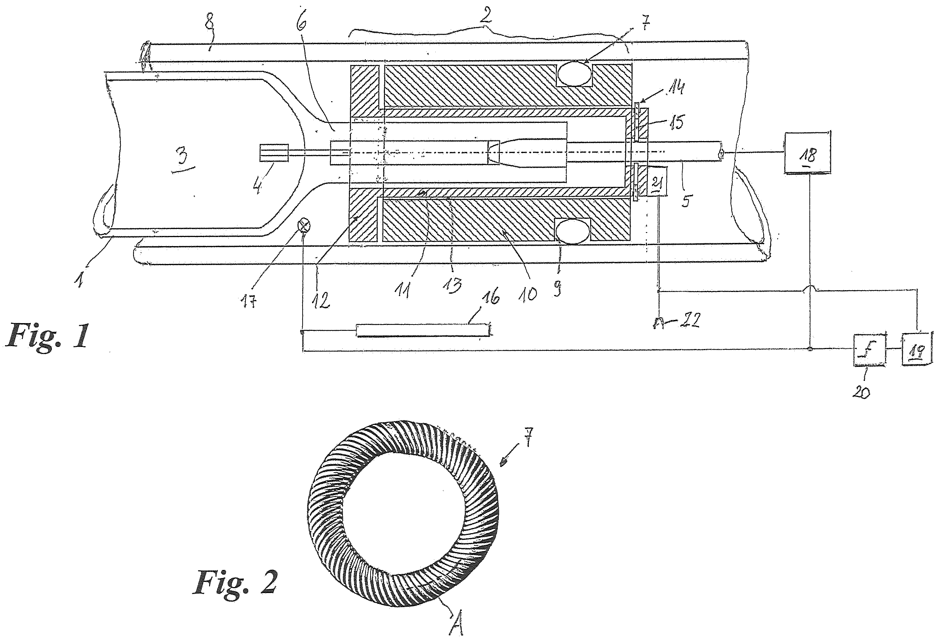

Die Kappe 2 besitzt ein ringförmiges Federelement 7 in Form einer Schraubenfeder, das in Fig. 1 grob schematisch, in Fig. 2 hingegen deutlicher dargestellt ist. Dieses Federelement 7 erfüllt zwei unterschiedliche Aufgaben. Einerseits werden durch seine radial wirkende Spannung Toleranzen zwischen Röhre und Rohr ausgeglichen, anderseits liegt die Schraubenfeder 7 mit einer relativ grossen Fläche an Kappe 2 und Rohr 8 an, so dass ein guter Wärmeübergang gegeben ist. Wie Fig. 2 zeigt, ist die Schraubenfeder 7 zu ihrer Mittellinie A (mindestens abschnittsweise) allseitig geneigt, d.h. sie ist so ausgeführt, wie dies beispielsweise in der US-A-2012/0098179 dargestellt ist. Anders ausgedrückt, liegen die Windungen der Feder 7 schief zu ihrer Mittellinie A. Dadurch ergibt sich eine bessere Radialkraft und ein flächigeres Anliegen der Feder 7 am äusseren Rohr 8. Um eine möglichst grosse Federfläche zu sichern, hat die Schraubenfeder 7 pro Zentimeter Ihres Umfangs bevorzugt eine Windungszahl von mindestens 7, vorzugsweise etwa 10.

Die Wärmeübergangsfläche der Schraubenfeder 7 wird noch vergrössert, wenn - wie dargestellt - sie in eine Ringnut 9 einer Metallhülse 10 eingelegt ist. Die Metallhülse 10 kann aus Kupfer sein, ist aber vorteilhaft aus einer Aluminiumlegierung gebildet. Die Metallhülse 10 sitzt auf einer relativ zu ihr dünnen Keramikhülse 11, die gegen die Elektrode 4 zu einen Flansch 12 trägt. Um den Wärmeübergang von der Keramikhülse 11 zur Metallhülse 10 zu verbessern, ist dazwischen ein wärmeleitendes, einen Ausgleich der wärmebedingten Längendehnungen zulassendes Material 13, wie Graphit, insbesondere eine Graphitfolie, angeordnet. Graphit erfüllt beide Bedingungen, nämlich die einer guten Wärmeleitung, aber auch die einer Art "Schmierung", welche durch die unter Umständen hohe Wärme bedingte Längendehnungen zwischen dem Keramikmaterial der Hülse 11 und der Metallhülse 10 zulässt. Der Aussenumfang der Metallhülse 10 gibt Strahlungswärme gegen das Rohr 8 ab, das von aussen her gekühlt sein kann. Dies ergibt sich zwangsläufig dann, wenn die Röhre 1 eine UV-Röhre zur Behandlung von Fluiden ist, vorzugsweise von Wasser, insbesondere zur Desinfektion. Andernfalls könnte eine lediglich schematisch angedeutete, an sich bekannte Kühleinrichtung 16 vorgesehen und allenfalls von einem im Inneren des Ausbaues angeordneten Temperatursensor 17 gesteuert werden. Alternativ oder zusätzlich kann der Temperatursensor 17 aber auch an eine Leistungsregelstufe 18 für die Röhre 1 angeschlossen sein. Eine vereinfachte Lösung sieht vor, dass der Temperatursensor 17 an eine Anzeigeeinheit 19, z.B. über einen Schwellwertschalter 20, angeschlossen ist, durch welche angezeigt wird, mit welcher Temperatur die Einschmelzzone 6 belastet ist, bzw. ob die Temperatur einen bestimmten Schwellwert überschreitet.

Es ist vorteilhaft, wenn die beiden Hülsen 10, 11 lösbar miteinander verbunden sind, und zu diesem Zwecke ist ein die Metallhülse 10 festhaltender Schnappring 14 in eine Vertiefung oder Nut 15 eingesetzt. Zum Lösen der Verbindung braucht also dieser Schnappring 14 nur abgezogen zu werden.

Es ist vorteilhaft, wenn mit der Röhre 1, z.B. mit der Keramikhülse 11 ihrer Kappe 2, ein Speicher 21 (z.B. ein RFID) verbunden ist. Über einen Anschluss 22 kann dann beispielsweise die eingespeicherte Identifizierung des Lampentyps und/oder seiner Seriennummer abgelesen und/oder seine Funktionsfähigkeit überprüft werden. Auch ist es etwa möglich, dass dieser Speicher 21 als Fehlerspeicher ausgebildet ist, der beispielsweise von der Anzeigeeinheit 19 Informationen erhält, wie oft und wie lange eine als zulässig erachtete Temperatur überschritten wurde.

Im Rahmen der Erfindung sind zahlreiche Abwandlungen möglich; beispielsweise kann an Stelle einer Schraubenfeder 7 deren zwei über die axiale Länge der Kappe 2 vorgesehen sein.

## Patentansprüche

1. Geschlossen aufgebaute Entladungsröhre (1) die an beiden Enden jeweils eine mit dem jeweiligen elektrischen Anschluss (5) versehene Kappe (2) aufweist, wobei die Entladungsröhre (1) in einem als Abdeckung dienenden transparenten oder durchscheinenden Rohr (8) untergebracht ist und zwischen Entladungsröhre (1) und Rohr (8) endseitig der Entladungsröhre (1) jeweils ein in Radialrichtung federndes Federelement (7) eingebaut ist, wobei als Federelement eine zu einem Ring geschlossene Schraubenfeder (7) eingesetzt ist, durch welche einerseits Toleranzen zwischen Entladungsröhre (1) und Rohr (8) ausgleichbar sind und anderseits über die Schraubenflächen ein Wärmeübergang erzielbar ist, **dadurch gekennzeichnet, dass** die Kappen (2) der Entladungsröhre (1) je eine den jeweiligen elektrischen Anschluss (5) umgebende Metallhülse (10) aus Aluminium oder Kupfer mit einer Ringnut (9) umfassen wobei die Schraubenfeder (7) in der Ringnut (9) der Metallhülse (10) sitzt.

2. Entladungsröhre (1) nach Anspruch 1, **dadurch gekennzeichnet, dass** als Schraubenfeder (7) eine axial federnde Schraubenfeder vorgesehen ist, deren Windungen schief zu ihrer Mittellinie (A) liegen.

3. Entladungsröhre (1) nach Anspruch 1, **dadurch gekennzeichnet, dass** die Metallhülse (10) an einer relativ dünnen Keramikhülse (11) mit der Entladungsröhre (1) zugewandtem Flansch (12) sitzt und der Wärmeübergang von dieser auf die Metallhülse (10) über ein wärmeleitendes, einen Ausgleich der wärmebedingten Längendehnungen zulassendes Material (13), wie Graphit, insbesondere eine Graphitfolie, erfolgt.

4. Entladungsröhre (1) nach Anspruch 3, **dadurch gekennzeichnet, dass** Keramikhülse (11) und Metallhülse (10) lösbar, z.B. über einen Schnappring (14), miteinander verbunden sind.

5. Entladungsröhre (1) nach einem der vorhergehenden Ansprüche, **dadurch gekennzeichnet, dass** im Bereich der Entladungsröhre (1) bzw. ihrer Kappe (2) ein Temperatursensor (17) untergebracht ist, durch den eine Leistungsregelung (18) für die Entladungsröhre (1), und/oder eine Regelung einer Kühlung (16) und/oder eine Anzeigeeinheit (19) ansteuerbar ist.

## Claims

1. A discharge tube (1) embodied in a closed form, which has a cap (2) provided with the respective electrical connection (5) on both ends, wherein the discharge tube (1) is accommodated in a transparent or translucent pipe (8), which serves as cover and a spring element (7), which is resilient in the radial direction, is installed at each end of the discharge tube (1) between discharge tube (1) and pipe (8), wherein a helical spring (7), which is closed to form a ring, is used as spring element, by means of which tolerances between discharge tube (1) and pipe (8) can be compensated on the one hand and heat transfer can be achieved via the helical faces on the other hand, **characterised in that** the caps (2) of the discharge tube (1) each comprise a metal sleeve (10) of aluminium or copper comprising an annular groove (9), which surrounds the respective electrical connection (5), wherein the helical spring (7) is located in the annular groove (9) of the metal sleeve (10).

2. The discharge tube (1) according to claim 1, **characterised in that** an axially springloaded helical spring is provided as helical spring (7), the turns of which are located obliquely to the centre line (A) thereof.

3. The discharge tube (1) according to claim 1, **characterised in that** the metal sleeve (10) is located at a relatively thin ceramic sleeve (11) with a flange (12) facing the discharge tube (1), and the heat transfer from it to the metal sleeve (10) takes place via a heat conducting material (13), such as graphite, in particular a graphite film, which permits a compensation of the heat-related longitudinal expansions.

4. The discharge tube (1) according to claim 3, **characterised in that** ceramic sleeve (11) and metal sleeve (10) are connected to one another in a releasable manner, e.g. via a snap ring (14).

5. The discharge tube (1) according to any one of the preceding claims, **characterised in that** a temperature sensor (17), by means of which a power controller (18) for the discharge tube (1) and/or a controller for a cooling system (16) and/or a display unit (19) can be controlled, is accommodated in the area of the discharge tube (1) or of its cap (2), respectively.

## Revendications

1. Tube à décharge (1) à structure fermée qui comporte à chacune de ses deux extrémités une calotte (2) pourvue d'une connexion électrique (5), ledit tube à décharge (1) étant logé dans un tube (8) transparent ou translucide servant de couverture et un élément-ressort (7) élastique dans la direction radiale étant monté entre le tube à décharge (1) et le tube (8) à l'extrémité du tube à décharge (1), l'élément-ressort utilisé se présentant sous la forme d'un ressort hélicoïdal (7) fermé de manière à former un anneau qui permet, d'une part, la compensation de tolérances entre le tube à décharge (1) et le tube (8) et, d'autre part, le transfert de chaleur par l'intermédiaire des surfaces hélicoïdales, **caractérisé en ce, que** les calottes (2) du tube à décharge (1) comportent chacune une douille métallique (10) en aluminium ou en cuivre présentant une rainure annulaire (9) et entourant la connexion électrique (5) respective, le ressort hélicoïdal (7) étant logé dans la rainure annulaire (9) de la douille métallique (10).

2. Tube à décharge (1) selon la revendication 1, **caractérisé en ce, que** soit prévu en tant que ressort hélicoïdal (7) un ressort hélicoïdal à action élastique axiale, dont les spires sont agencées de manière oblique par rapport à leur ligne médiane (A).

3. Tube à décharge (1) selon la revendication 1, **caractérisé en ce, que** la douille métallique (10) soit positionnée sur une douille en céramique (11) relativement mince qui possède une bride (12) dirigée vers le tube à décharge (1) et que le transfert de chaleur de celle-ci sur la douille métallique (10) s'effectue par l'intermédiaire d'un matériau (13) conducteur thermique permettant une compensation des dilatation longitudinales thermiques, comme le graphite, notamment une feuille de graphite.

4. Tube à décharge (1) selon la revendication 3, **caractérisé en ce, que** la douille en céramique (11) et la douille métallique (10) soient reliées entre elles de manière démontable, par un anneau élastique d'arrêt (14), par exemple.

5. Tube à décharge (1) selon l'une des revendications précédentes, **caractérisé en ce, que** soit monté dans la zone du tube à décharge (1) ou encore de sa calotte (2) un capteur de température (17), par l'intermédiaire duquel il soit possible de commander un régulateur de puissance (18) pour le tube à décharge (1), et/ou un régulateur d'un dispositif de refroidissement (16) et/ou une unité d'affichage (19).
